# EUROPÄISCHE PATENTSCHRIFT

(11) **EP 3 469 570 B1**
(45) Veröffentlichungstag und Bekanntmachung des Hinweises auf die Patenterteilung: **26.02.2025**
(21) Anmeldenummer: 17732791.3
(22) Anmeldetag: 07.06.2017
(51) Int. Cl.: G08G 1/16, H04W 28/02, H04L 67/12, H04W 4/40

(54) **VORRICHTUNG, VERFAHREN UND COMPUTERPROGRAMM ZUM ERFASSEN UND ÜBERTRAGEN VON DATEN**
DEVICE, METHOD, AND COMPUTER PROGRAM FOR CAPTURING AND TRANSFERRING DATA
DISPOSITIF, PROCÉDÉ ET LOGICIEL POUR DÉTECTER ET TRANSMETTRE DES DONNÉES

(30) Priorität: 08.06.2016 DE 102016210092
(43) Veröffentlichungstag der Anmeldung: 17.04.2019
(73) Patentinhaber: Volkswagen Aktiengesellschaft, 38440 Wolfsburg (DE)
(72) Erfinder: GÜNTHER, Hendrik-Jörn, Troy, MI 48084 (US); GLÄSER, Stefan, 38104 Braunschweig (DE); ENGEL, Monique, 38110 Braunschweig (DE); RECH, Bernd, 38556 Bokensdorf (DE); LEHMANN, Bernd, 38444 Wolfsburg (DE); KLEINAU, Sandra, 38531 Rötgesbüttel (DE); BUBURUZAN, Teodor, 38118 Braunschweig (DE); HARTOG, Johannes, 38106 Braunschweig (DE)
(86) Internationale Anmeldenummer: PCT/EP2017/063782
(87) Internationale Veröffentlichungsnummer: WO 2017/211868

(56) Entgegenhaltungen:
- EP-A1- 2 843 639
- WO-A2-2006/106455
- WO-A2-2008/104886
- WO-A2-2015/144887
- DE-A1- 102010 038 640
- US-A1- 2002 030 611
- US-A1- 2009 081 958
- US-A1- 2013 278 440
- US-A1- 2013 336 120

## Beschreibung

Ausführungsbeispiele der vorliegenden Erfindung betreffen allgemein eine Erfassung und Übertragung von Daten von einem Sender zu einem als Fahrzeug ausgebildeten Empfänger und insbesondere die Steuerung der Erfassung und Übertragung solcher Daten.

Zur Optimierung des Verkehrs-Flusses, Vermeidung von Verkehrsunfällen und Erhöhung des Fahrkomforts können kooperative Fahrfunktionen entwickelt werden. Hierbei findet die V2X-(Vehicle to X, wobei X zum Beispiel für Vehicle oder auch Infrastructure stehen kann) Technologie Anwendung, die eine Ad-hoc-Kommunikation zwischen Fahrzeugen ermöglicht. Gerade während der Einführungsphase von V2X ist zunächst nur eine geringe Ausstattungsrate von V2X-Fahrzeugen zu erwarten. Die bislang standardisierten V2X-Nachrichten (CAM (Cooperative Awareness Message) und DENM (Decentralized Environmental Notification Message)) enthalten lediglich Informationen über den Zustand des Senderfahrzeugs. Würden zusätzlich noch Informationen über die vom Senderfahrzeug detektierten, umgebenden Objekte (insbes. andere Fahrzeuge, die nicht V2X-fähig sind) versendet, könnte die Anzahl der erkannten Fahrzeuge in der Umgebung erhöht und die Nachteile der zunächst geringen Ausstattungsrate überwunden werden.

Solche Daten von Sendefahrzeugen oder auch von Infrastruktur würden in Ergänzung der oben genannten standardisierten V2X-Nachrichten kommuniziert werden. Dabei werden die V2X-Nachrichten periodisch erzeugt und versendet, siehe auch ETSI ITS-G5 Referenzarchitektur. Eine direkte Übernahme dieser periodischen Erzeugung und Versendung auch für die zusätzlichen Daten der umgebenden Objekte würde der effizienten Nutzung der Nachrichtenübertragungskapazität entgegenstehen, da ein erhebliches zusätzliches Verkehrsaufkommen mit der Verbreitung der V2X-Technoilogie in Verbindung mit den zusätzlichen Daten zu erwarten ist.

US 2002/03061 1 A1 lehrt ein Verfahren zum Übertragen von Datenpaketen zwischen Kraftfahrzeugen, das ein Übertragen einzelner Datenpakete einschließlich Fahrzeugdaten und Erzeugungsdaten für die einzelnen Datenpakete umfasst.

US 2013/336120 A1 lehrt ein Fahrzeugkommunikationssystem und -verfahren, die beim Senden und Empfangen von Fahrinformationen eines Fahrzeugs zu und von umgebenden Fahrzeugen verwendet werden.US 2009/081958 A1 lehrt ein Verfahren und ein System zum Einstellen der Übertragungsrate von Nachrichten, die von einer mobilen Einheit gesendet und empfangen werden.

EP 2 843 639 A1 lehrt eine Kommunikationsvorrichtung, die an einem Fahrzeug montiert werden soll.

WO 2006/106455 A2 lehrt die Bereitzustellung eines Verfahrens zur Übertragung von Nachrichten zwischen Mobilknoten in einem Ad-hoc-Netzwerk, das eine zuverlässige Übertragung relevanter Informationen auch bei einer großen Anzahl von Knoten gewährleistet.

WO 2008/104886 A2 lehrt die Steuerung eines Übertragungszyklus- / Ausgabesteuerabschnitts einer Übertragungsausgabe einer Fahrzeug-Kommunikationsvorrichtung und / oder eine Übertragungsfrequenz von der Fahrzeug-Kommunikationsvorrichtung gemäß der Geschwindigkeit eines Host-Fahrzeugs.

WO 2015/144887 A2 lehrt ein computerimplementiertes Verfahren zur Implementierung einer V2X-Anwendung auf einer Zielhardware mit einem Funkadapter, wobei die V2X-Anwendung mit einer graphischen Modellierungsumgebung in Form eines Blockschaltbildes modelliert wird. US 2013/278440 A1 lehrt Vorrichtung, System und Verfahren zum Implementieren eines drahtlosen Fahrzeug-zu-Fahrzeug-Antikollisionssystems.

DE 10 2010 038640 A1 lehrt ein Verfahren zur Kommunikation eines Fahrzeugs mit mindestens einem weiteren Fahrzeug und/oder zur Kommunikation eines Fahrzeugs mit einer Infrastruktureinrichtung (C2X-Kommunikation).

Daher wäre es wünschenswert, die zusätzlichen Daten der umgebenden Objekte bedarfsgerecht zu erzeugen und situationsgerecht zu versenden und so die Effizienz der V2X-Technologie zu verbessern.

Dem wird durch eine Vorrichtung, ein Verfahren und ein Computerprogramm jeweils mit den Merkmalen der unabhängigen Patentansprüche Rechnung getragen. Vorteilhafte Ausgestaltungen und Weiterbildungen sind Gegenstand der abhängigen Ansprüche.

Ein Kerngedanke der Erfindung ist die Trennung der Erzeugung der Daten von der Übertragung der Daten zwischen Sender und Empfänger. Dabei richtet sich die Erzeugung der Daten nach dem durch Sensoren oder anderweitig erfassten Informationen eines geografischen Umfeldmodells des Senders und insbesondere nach den aus diesen Informationen extrahierten Objekten. Die so erzeugten Daten werden jedoch nicht automatisch übermittelt. Vielmehr richtet sich deren Übertragung nach Umfeldparametern des Senders, die verkehrsrelevante Parameter beim Sender sowie auch Parameter des Übertragungssystems umfassen können. Erstere sind zum Beispiel Straßenführung, Fahr- oder Verkehrszustand beim Sender. Letztere sind die Erreichbarkeit von Empfängern und zum Beispiel die Kanalkapazität oder das Vorhandensein von Nachrichten mit höherer Priorität. Dieses Verfahren schließt auch eine verzögerte Übertragung der Daten oder den Verwurf von erzeugten Daten ein. Durch die Entkopplung der Erzeugung und der Übertragung der Daten und die Bindung beider Vorgänge an verschiedene Parameter kann vorteilhaft ein Gleichgewicht zwischen der Bereitstellung relevanter Information und der Nutzung des Übertragungskanals hergestellt werden.

Gemäß einem ersten Aspekt schaffen Ausführungsbeispiele ein Verfahren das in Anspruch 1 definiert ist.

Sender können als Einrichtungen ausgestaltet sein, die eine Sendeeinrichtung zur Übertragung von elektromagnetischen Wellen umfassen. Diese sind zur drahtlosen Übermittlung an einen Empfänger bestimmt, der passend zum Sender ausgelegt ist. Sendereigenschaften (und auch Empfängereigenschaften) können auch standardisiert sein, zum Beispiel in der V2X-Technologie, zum Beispiel gemäß der oben genannten ETSI ITS-G5 Referenzarchitektur.

Darüber hinaus kann der Sender auch ein Fahrzeug, ein gegebenenfalls tragbares Gerät eines Verkehrsteilnehmers oder auch Infrastruktur umfassen, zum Beispiel als Verkehrszeichen oder als Straßenbauwerk.

Unter Verkehrsteilnehmer sind Empfänger zu verstehen, die die übertragenden Daten empfangen können und sich am Straßenverkehr beteiligen. Insbesondere können das Fahrzeuge aller Art sein, die motorisiert aber auch nicht motorisiert ausgeführt sein können. Motorisierte Fahrzeuge können ein- oder mehrspurig ausgeführt sein und Mofas, Mopeds, Motorräder sowie Personenkraftwagen, Wohnmobile, Lastkraftwagen und Busse umfassen. Nicht motorisierte Fahrzeuge können als Fahrrad und von Tieren bewegte Fahrzeuge umfassen, zum Beispiel Kutschen. Weiter können auch Fußgänger als Verkehrsteilnehmer angesehen werden, die mit zum Beispiel tragbaren Empfangsgeräten ausgestattet sein können.

Das geografische Umfeldmodel erstreckt sich um den Sender herum und kann zum Beispiel einen Radius von 200 Meter abdecken. Es wird zum Beispiel durch Sender eigene Sensoren erfasst, die als Radar-, Lidar-, Infrarot-, Ultraschallsensor oder Kamera ausgebildet sein können, wobei die Sensordaten in einer so genannten Datenwolke abgelegt werden können. Aus zum Beispiel dieser Datenwolke extrahieren geeignete Algorithmen das geografische Umfeldmodel, das die zur Verkehrsteilnahme relevante Information des Umfeldes des Senders abbildet. Insbesondere umfasst das geografische Umfeldmodel auch Objekte im Umfeld des Senders.

Objekte umfassen Gegenstände und Verkehrsteilnehmer, die für die Beurteilung des Fahrzeugumfeldes Relevanz haben. Sie können in dynamische und statische Objekte unterschieden werden. Dynamische Objekte bewegen sich relativ zur Fahrbahn des als Empfänger ausgebildeten Verkehrsteilnehmers und können insbesondere als motorisierte oder nicht motorisierte weitere Verkehrsteilnehmer ausgebildet sein und Fußgänger, Fahrradfahrer, Mopeds, Motorräder und mehrspurige Kraftfahrzeuge vielerlei Art umfassen. Statische Objekte haben einen festen geografischen Ort und können zum Beispiel als Infrastruktur in Fahrbahnnähe lokalisiert sein. Sie können Verkehrszeichen, zum Beispiel als Ampel, oder Verkehrsbauwerke umfassen, die zum Beispiel als Leitplanken oder Brücken ausgebildet sein können. Die Erkennung der Objekte stützt sich auf Sensordaten oder empfangene Daten der V2X-Technologie und kann mit bekannten Verfahren erfolgen.

Umfeldparameter des Senders beschreiben das Senderumfeld. Sie können dabei zur Einstellung einer Sendehäufigkeit der zu sendenden Daten herangezogen werden. So kann bei periodischer Übertragung der Daten die Sendehäufigkeit der Daten beeinflusst werden, die zum Beispiel zwischen einem minimalen Wert und einem maximalen Wert eingestellt werden kann.

Verkehrsrelevante Parameter im Umfeld des Senders können Aussagen zu Verkehr, Straßenzustand und Fahrbahn umfassen und so das Senderumfeld charakterisieren. Sie können aber auch auf Übertragungsaspekte der V2X-Kommunikation beziehen und dabei Kanalauslastungen oder weitere zu übertragende Nachrichten berücksichtigen.

Vorteilhaft kann so die Erzeugung und Übertragung der Daten an verschiedene voneinander unabhängige Parameter geknüpft werden und so unabhängig voneinander optimiert werden. In manchen Ausführungsbeispielen können verkehrsrelevante Parameter Daten zur Beschreibung zumindest des als Fahrzeug ausgebildeten Senders- und/oder eines Verkehrszustand und/oder einer Straßenführung umfassen.

Ein Zustand des als Fahrzeug ausgebildeten Senders kann seine Geschwindigkeit sein. Verkehrszustände können die Dichte des Verkehrs umfassen, den Abstand zu anderen Verkehrsteilnehmern sowie die Änderungsgeschwindigkeit des jeweils erfassten Zustandes. Der Verkehrszustand kann eine hohe Verkehrsdichte umfassen, die die "Sichtweite" der eigenen Sensoren beschränken kann. Gleichzeitig kann von einer höheren Anzahl von Fahrzeugen mit V2X-Technologie ausgegangen werden, sodass vermehrt Fahrzeuge von anderen V2X-Teilnehmern erfasst werden können. Unter Straßenführung kann die Ausgestaltung einer Straße verstanden werden, die Geraden, Kurven, Kreuzungen, Auffahrten oder Einmündungen umfassen kann.

Vorteilhaft können somit verschiedene relevante Parameter in die Bestimmung der Sendehäufigkeit eingehen.

In Ausführungsformen umfassen Parameter des Übertragungssystems eine Erreichbarkeit des zumindest eines Empfängers. Bei einigen Ausführungsformen können Parameter des Übertragungssystems eine Kanalkapazität des Kanals zur Übertragung der Daten und/oder das Vorhandensein einer Nachricht mit höherer Priorität umfassen.

Die Kanalkapazität kann als Auslastung des Übertragungskanals verstanden werden. Dabei ist die Kanalkapazität Teil einer informationstheoretischen Beschreibung eines Übertragungskanals. Sie gibt die höchste Bitrate an, mit der Informationen über einen Kanal gerade noch fehlerfrei übertragen werden können. Wie bereits erwähnt, kann für die Übertragung der Daten der gleiche Kanal verwendet werden, auf dem bereits standardisierte Nachrichten wie CAM und DENM übertragen werden. Dieser Kanal kann ebenfalls standardisiert sein und weist eine gewisse Gesamtkanalkapazität auf, die sich aus der Standardisierung ergibt und auch den Verkehr anderer V2X Teilnehmer berücksichtigt. Die noch freie Kanalkapazität kann beim Sender ermittelt werden, zum Beispiel durch Beobachtung der aktuellen Bitrate auf dem Kanal. Es kann aber die im ETSI Standard verwendete Decentralised Congestion Control (DCC) dazu herangezogen werden. Entsprechend kann je nach Lastzustand die Übertragung der Daten beeinflusst werden, zum Beispiel in dem bei Überlast das zu sendende Datenpaket verworfen wird.

Die Erreichbarkeit des zumindest eines Empfängers kann zum Beispiel durch "hören" via V2X Übertragung oder "sehen" via Sensorik anderer V2X Teilnehmer festgestellt werden. Wenn also weder ein Fahrzeug "gehört" noch "gesehen" wird, dann ist davon auszugehen, dass kein Kommunikationspartner in der Nähe ist. In diesem Falle kann das Senden der Daten unterbleiben.

Das Vorhandensein einer Nachricht mit höherer Priorität kann sich auf die standardisierten Nachrichten beziehen, die über den gleichen Kanal übertragen werden sollen. So kann zum Beispiel eine CAM oder eine DENM Nachricht zur Übertragung anstehen, die mit höherer Priorität versehen ist.

Vorteilhaft können somit verschiedene wesentliche Übertragungsparameter in die Bestimmung der Sendehäufigkeit eingehen.

Optional können die Kanalkapazität und/oder die verkehrsrelevanten Parameter die Übertragungshäufigkeit der Daten beeinflussen.

Die Übertragungshäufigkeit ist bei periodischer Übertragung festzulegen als die Häufigkeit, mit der Daten übertragen werden.

Vorteilhaft kann durch die Berücksichtigung der Kanalkapazität und der verkehrsrelevanten Parameter die Übertragungshäufigkeit sowohl eine Dringlichkeit der Übertragung als auch die aktuellen Übertragungsmöglichkeiten berücksichtigen.

In manchen Ausführungsbeispielen kann der Kanal zur Übertragung der Daten auch zur Übertragung von allgemeinen Aufmerksamkeitsnachrichten -CAM- und/oder dezentralisierter Umfeldnachrichten -DENIM- verwendet wird.

Dabei können die CAM und die DENM gemäß Standards ETSI TS 102 894-2 verwendet werden. Die CAM kann dabei Fahrzeugstatusnachrichten des Senders übertragen. Die DENM kann eine dezidierte Warnung vor Gefahrensituationen realisieren. Natürlich können auch weiter Nachrichten über den Kanal übertragen werden, die sowohl standardisiert als auch proprietär sein können.

Vorteilhaft kann somit der standardisierte V2X-Kanal vielfältig verwendet werden.

Bei einigen Ausführungsformen kann der Kanal zur Übertragung der Daten gemäß einer standardisierten Referenzarchitektur ausgebildet sein.

Als standardisierte Referenzarchitektur kann die ETSI TS 102 894-2 verwendet werden, in der auch die bereits genannten CAM und DENM Nachrichten übertragen werden können.

Vorteilhaft kann so die Implementierung weiterer Kanäle neben den in ETSI festgelegten Kanälen vermieden werden und somit die Belegung weiterer Funkressourcen vermieden werden.

Optional kann der Sender als weiterer Verkehrsteilnehmer oder als Infrastruktur ausgebildet sein.

Infrastruktur kann dabei als Verkehrszeichen, zum Beispiel als Ampel, oder als Verkehrsbauwerke ausgebildet sein, die zum Beispiel Leitplanken oder Brücken umfassen, wie bereits ausgeführt.

Vorteilhaft kann somit die Anzahl der Sender gerade zu Beginn der V2X-Verbreitung in Fahrzeugen auch durch Bauwerke erhöht werden.

In manchen Ausführungsbeispielen können Sender und/oder Empfänger als Fahrzeuge ausgebildet sein.

Vorteilhaft kann somit auch in Abwesenheit von Infrastruktur die Anzahl der V2X-Teilnehmer erhöht werden und in den Umfeldparametern des Senderfahrzeugs berücksichtigt werden.

Bei einigen Ausführungsformen kann das geografische Umfeldmodel des Senders eine Objekterkennung auf Basis lokaler Sensordaten des Senders und/oder auf Basis von Sensordaten anderer Verkehrsteilnehmer oder von Infrastruktur umfassen.

Die Objekterkennung basierend auf den Sensordaten kann auf verschiedene Arten erfolgen. So kann zum Beispiel ein hierarchisches Modell zum Einsatz kommen, bei dem eine Datenwolke mit allen Sensordaten als Basis dient. In einem ersten Schritt werden nun aus den Daten der Datenwolke Fragmente von Objekten identifiziert, zum Beispiel Teile eines Armes, eines Rumpfes oder eines Kopfes. In einem zweiten Schritt wird dann versucht, die Fragmente zu Teilobjekten zu verbinden, also zu Armen, einem Rumpf oder einem Kopf. Im dritten Schritt erfolgt dann die eigentliche Objekterkennung, die im genannten Beispiel das Objekt einer Person identifiziert.

Sensordaten anderer Verkehrsteilnehmer oder von Infrastruktur können zur Objekterkennung mit herangezogen werden. Diese Informationen können im Vorfeld der Objekterkennung vom Sender empfangen werden. Sie können dann der oben genannten Datenwolke hinzugefügt werden, sodass sie neben den durch eigene Sensoren ermittelten Daten das geografische Umfeldmodel anreichern können.

Vorteilhaft kann so die Datenbasis zur Objekterkennung vergrößert werden.

Optional kann die Objekterkennung Daten für Existenzwahrscheinlichkeit des Objekts und/oder Veränderungsangaben des Objekts umfassen, wobei die Daten für Veränderungsangaben des Objekts zeitlich und/oder räumliche Veränderungen beschreiben.

Eine Existenzwahrscheinlichkeit erkannter Objekte hängt wesentlich von einer kontinuierlichen Erkennung des Objekts durch die zugehörigen Sensoren ab. Darüber hinaus veralten Sensorinformationen relativ schnell, sei es, dass ein Objekt sich aus dem Betrachtungsraum entfernt oder sich in diesem Raum verändert.

Die Veränderungsangaben beschreiben ein Maß der Veränderung des Objektes. So können bei großem Geschwindigkeitsunterschied zwischen Objekt und Sender oder durch Eigenbewegung des Objektes erhebliche Objektveränderungen in kurzer Zeit auftreten. Entsprechend kann erhöhte Rechenleistung zur Begleitung des Objekts sowie eine erhöhte Beobachtung der Existenzwahrscheinlichkeit zweckmäßig sein.

Vorteilhaft kann so die Objekterkennung und Verfolgung durch Objekt begleitende Parameter verbessert werden.

In manchen Ausführungsbeispielen kann ein Anlass zur Erzeugung der Daten durch verschiedene Ereignisse gegeben sein. So kann ereignisabhängig eine periodische Erzeugung stattfinden. Alternativ kann eine Erzeugung stattfinden, sobald ein Objekt erkannt ist, oder eine Erzeugung stattfinden, sobald ein Objekt mit überwiegender Existenzwahrscheinlichkeit erkannt ist. Weiter alternativ kann eine Erzeugung, sobald ein Objekt ein Veränderungsmaß überschritten hat, oder eine Erzeugung, sobald ein Objekt mit überwiegender Existenzwahrscheinlichkeit ein Veränderungsmaß überschritten, gewählt werden.

Periodische Erzeugungen haben die Eigenschaft, dass sich ihre Funktionswerte in regelmäßigen Abständen wiederholen. Die Abstände zwischen dem Auftreten der gleichen Funktionswerte werden dabei Periode genannt. Es ist eine Vielzahl von periodischen Erzeugungen realisierbar.

Ein erster Algorithmus -A1- beschreibt das periodische Senden einer Nachricht. Die Nachricht kann dabei stets nach Ablauf eines festen Zeitintervalls gesendet werden, also unabhängig von der Existenz von Objekten in einer zugehörigen Datenbank.

Ein zweiter Algorithmus -A2- beschreibt das periodische Senden einer Nachricht, wenn gleichzeitig ein Objekt zur Verfügung steht, also in einer fahrzeugeigenen Objektdatenbank hinterlegt ist. Die Nachricht kann dabei nach Ablauf eines festen Zeitintervalls gesendet werden, wenn auch die Überprüfung erfolgreich war, dass ein Objekt zur Verfügung steht.

Ein dritter Algorithmus -A3- beschreibt das periodische Senden einer Nachricht, wenn ein Objekt zur Verfügung steht und dieses auch noch valide ist, also hinsichtlich seiner Existenzwahrscheinlichkeit (z. B. durch Abgleich mit weiteren Sensordaten) ein Schwellwert überschritten wurde. Die Nachricht kann dabei nach Ablauf eines festen Zeitintervalls gesendet werden.

Weitere mögliche Periodizitäten werden bei den Ausführungsbeispielen beschrieben.

Die Erkennung von Objekten basiert auf Sensordaten aus dem Fahrzeugumfeld und/oder gegebenenfalls auf durch die V2X-Technologie empfangene Nachrichten. Dabei können die so gewonnenen Daten in einer Datenwolke erfasst werden und in zum Beispiel mit dem oben genannten hierarchischen Modell auf Objekte hin analysiert werden. Erkannte Objekte werden erfasst und regelmäßig überprüft. Entsprechend kann eine Objekterkennung einen Anlass zur Erzeugung der Daten darstellen, wie beschrieben.

Die Existenzwahrscheinlichkeit eines Objektes ist ein wesentlicher Parameter. Er kann jedem Objekt zugeordnet sein und kann einer regelmäßigen Aktualisierung unterliegen. Eine Überschreitung eines Schwellwertes dieses Parameters kann einen Anlass zur Erzeugung der Daten darstellen, wie bereits dargestellt.

Das Veränderungsmaß ist ähnlich der Existenzwahrscheinlichkeit ein Maß, das den Objekten zugeordnet sein kann. Es beschreibt das Maß der Veränderung des Objektes und kann, abhängig von einem Schwellwert der Daten des Veränderungsmaßes, die Zuweisung von erhöhter Rechenleistung zur Verfolgung des Objektes sowie die Häufigkeit seiner Aktualisierung beeinflussen oder einen Anlass zur Erzeugung der Daten darstellen. Es kann regelmäßig aktualisiert werden.

Vorteilhaft kann somit die Erzeugung der Daten flexibel einer Vielzahl von Ereignissen angepasst werden.

Bei einigen Ausführungsformen können die Daten in einem Datenfeld über ein mobiles Netzwerk gesendet werden. Das Datenfeld kann dabei Folgendes umfassen: ein Headerfeld mit genereller Information und der Nachrichten- und Fahrzeug/Infrastruktur-Identifikation. Weiter kann das Datenfeld ein Beschreibungsfeld umfassen, das seinerseits eine Identifikation des Fahrzeugs und/oder eine Position des Fahrzeugs und/oder einen Abstand des Fahrzeugs und/oder eine Geschwindigkeit des Fahrzeugs und/oder eine Beschleunigung des Fahrzeugs und/oder zumindest eine Eigenschaft der lokalen Sensoren des Fahrzeugs umfasst. Darüber hinaus kann das Datenfeld einen dynamischen Objekt-Container umfassen, der die Beschreibung zumindest eines dynamischen Objekts umfasst. Darüber hinaus kann das Datenfeld einen statischen Objekt-Container umfassen, der seinerseits die Beschreibung zumindest eines statischen Objekts umfasst.

Eine nähere Beschreibung kann den Ausführungsbeispielen entnommen werden.

Vorteilhaft kann somit eine zweckmäßige Struktur gewählt werden, die eine effiziente Übertragung der Daten ermöglicht.

Gemäß eines weiteren Aspekts schaffen Ausführungsbeispiele eine Vorrichtung die in Anspruch 12 definiert ist.

Ein Erzeugungsprozessor ist ausgelegt, aus dem Umfeld der Vorrichtung Informationen zu erzeugen. Dies kann mit Hilfe von Sensordaten geschehen, die das Umfeld der Vorrichtung beobachten. Diese können zum Beispiel in einer Datenwolke oder einer anderen Speicherform abgelegt werden und anschließend in das geografische Umfeldmodel überführt werden. Letzteres umfasst auch die Identifikation von Objekten im Umfeld der Vorrichtung. Der Erzeugungsprozessor kann dabei als handelsüblicher Prozessor, als ASIC, als digitaler Signalprozessor, als eine Schaltungsanordnung oder als ähnlichen Bauteilen ausgebildet sein.

Ein Erfassungsprozessor zur Erfassung von Parametern eines Übertragungssystems zur Übertragung der Daten und/oder von verkehrsrelevanten Parametern - gemeinsam auch Umfeldparameter genannt - kann technisch ähnlich wie der Erzeugungsprozessor ausgebildet sein, wobei er dabei zur Erfassung von Umfeldparametern des Senders geeignet ist. Dabei können die verkehrsrelevanten Parameter der Umfeldparameter ebenfalls mit Sensoren erfasst werden, die zum Beispiel den Verkehrszustand oder die Straßenführung erfassen. Die Parameter des Übertragungssystems in den Umfeldparametern umfasst die Erreichbarkeit von Empfängern, die funktechnischer Natur ist.

Ein Datenerzeugungsprozessor kann als Prozessor ausgebildet sein, wobei er zur Umwandlung der Informationen des geografischen Umfeldmodels in die Struktur der zu sendenden Daten geeignet ist. Insbesondere zur Einbettung der Objektinformationen in die Daten ist er geeignet.

Eine Übertragungseinrichtung eignet sich zur drahtlosen Übertragung elektromagnetscher Wellen in Sende- und in Empfangsrichtung in einem Übertragungssystem. Sie kann gemäß der bereits mehrfach erwähnten V2X-Technologie ausgebildet sein und somit zur Kommunikation mit vielen Verkehrsteilnehmern und/oder Infrastruktur geeignet sein, insbesondere bei zunehmender Verbreitung des Standards.

Vorteilhaft kann so die Erzeugung und Übertragung der Daten an verschiedene voneinander unabhängige Parameter geknüpft werden und so unabhängig voneinander optimiert werden. Optional kann die Vorrichtung als Fahrzeug oder als Verkehrsinfrastrukturbauwerk ausgebildet sein.

Fahrzeuge können Verkehrsteilnehmer sein und als Fahrzeuge aller Art ausgebildet sein, wie bereits beschrieben. Verkehrsinfrastrukturbauwerke können Verkehrszeichenanlagen sein und zum Beispiel als Ampeln oder Multifunktionsanzeige ausgebildet sein können. Sie können aber auch als äußerlich passive Bauwerke ausgebildet sein, zum Beispiel als Blitzanlage zum Erfassen von Geschwindigkeitsübertretungen. Andere Bauwerke in Verkehrsnähe können ebenfalls geeignet sein.

Vorteilhaft kann so zu Anfang der V2X-Technologie ein Grundbestand von V2x-Teilnehmern durch Bauwerke geschaffen werden, der mit zunehmender Verbreitung in Fahrzeugen ergänzt wird.

Gemäß eines weiteren Aspekts schaffen Ausführungsbeispiele ein Computerprogramm das in Anspruch 14 definiert ist.

Einige beispielhafte Ausführungsbeispiele der vorliegenden Erfindung werden nachfolgend bezugnehmend auf die beiliegenden Figuren näher erläutert. Es zeigen:
- Fig. 1: ein Prinzipschaltbild der V2X Kommunikation
- Fig. 2: ein Verfahren gemäß einem Ausführungsbeispiel
- Fig. 3: eine Bestimmung der Erzeugung der Daten
- Fig. 4: alternative Erzeugungsformen der Daten
- Fig. 5: Sendevorgänge für periodische und aperiodische Erzeugung der Daten
- Fig. 6: eine Struktur eines Datenfeldes zur Übermittlung der Daten
- Fig. 7: zeigt ein Prinzipschaltbild einer Vorrichtung zur Erzeugung und Übertragung von Daten

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent sind, und nicht in einem idealisierten oder übermäßig formalen Sinn zu interpretieren sind, solange dies hierin nicht ausdrücklich definiert ist.

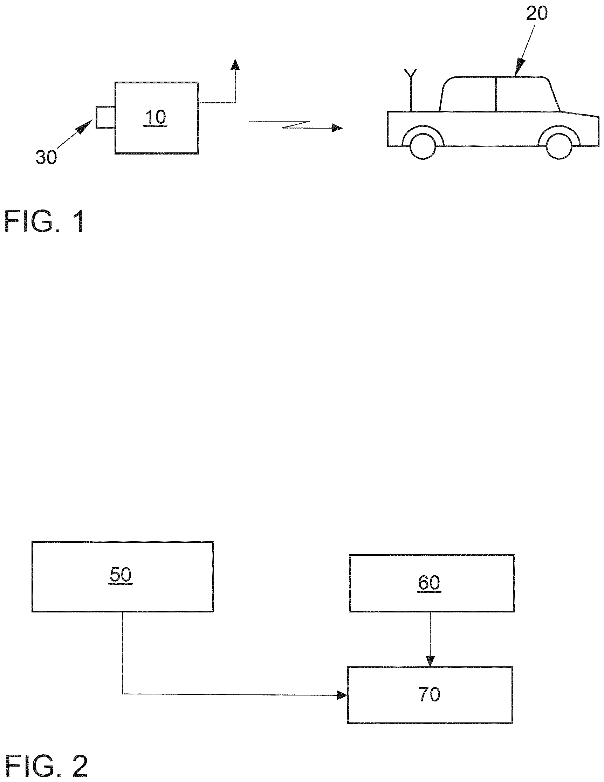

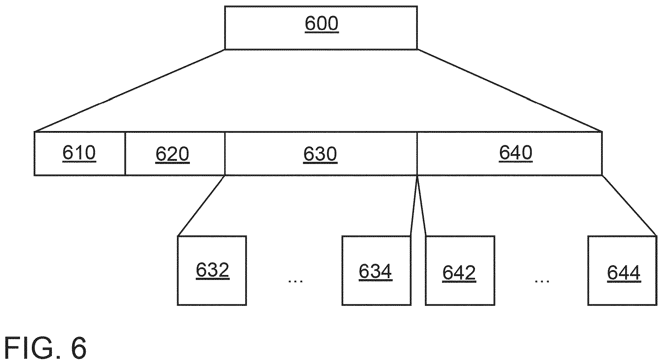

Die Fig. 1 zeigt ein Prinzipschaltbild der V2X-Kommunikation. Dabei überträgt ein Sender 10 Daten zu einem als Verkehrsteilnehmer ausgebildeten Empfänger 20. Die Übertragung erfolgt drahtlos mittels elektromagnetischer Wellen. Der Empfänger ist als Personenkraftwagen (PKW) ausgebildet. Dabei können die Daten als Environmental Perception Message (EPM) versendet werden, die sich in ihrer Struktur an die bekannten CAM und DENM Nachrichten anlehnt und unter Fig. 6 näher erläutert wird.

Die Fig. 2 zeigt ein Verfahren gemäß einem Ausführungsbeispiel. Dabei handelt es sich um ein Verfahren zur Erzeugung und Übertragung von Daten von einem Sender zu einem als Verkehrsteilnehmer ausgebildeten Empfänger. Die Daten basieren auf einem geografischen Umfeldmodel des Senders, wobei das geografische Umfeldmodel eine Erkennung von Objekten umfasst. Verfahrensschritte beim Sender umfassen die Erfassung 50 von Umfeldparametern des Senders, die Erzeugung 60 der Daten in Abhängigkeit der erkannten Objekte und die Übertragung 70 der Daten in Abhängigkeit der Umfeldparameter des Senders.

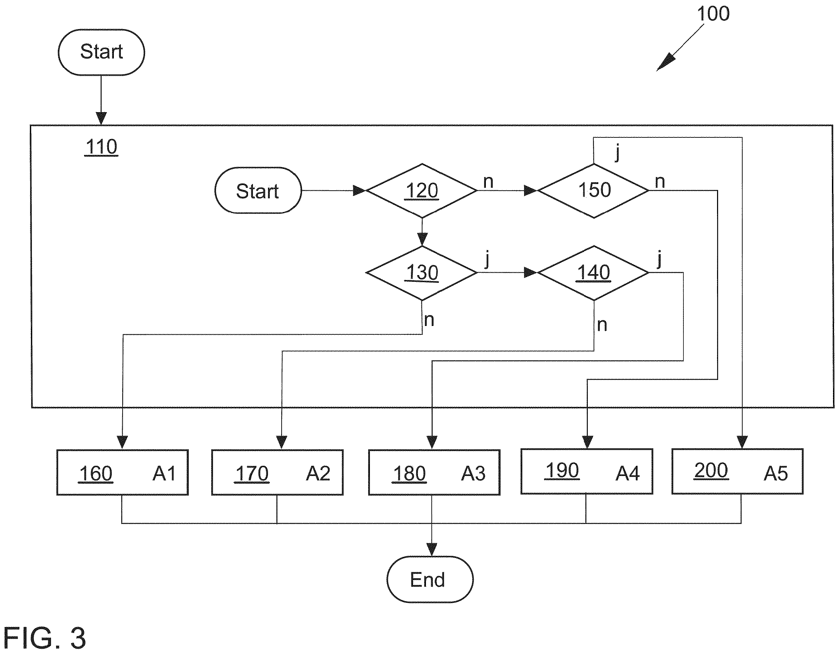

Die Fig. 3 zeigt eine Bestimmung der Erzeugung der Daten 100. Dabei wird festgelegt, welcher Anlass zur Erzeugung der Daten relevant ist. So wird im übergeordneten Vorgang 110 der Anlass festgelegt. Der übergeordnete Vorgang 110 umfasst einen Start-Vorgang, der in die Abfrage "periodisch Erzeugen der Daten?" 120 mündet. Dieser Anlass kann gewählt werden bei einem Fahrzeug mit hoher Priorität (z. B. Rettungswagen im Einsatz), oder wenn bislang kein Kommunikationspartner wahrgenommen wurde. Entsprechend kann bei periodischem Senden auf eine Antwort gehofft werden. Weiter kann davon ausgegangen werden, dass auch die Information "Ich nehme kein Objekt in meiner Umgebung wahr." für andere Teilnehmer der V2X-Technologie relevant ist.

Bei Bejahung von "periodisch Erzeugen der Daten?" 120 wird in dem Vorgang "Erzeugen der Daten bei Objektanwesenheit?" 130 verzweigt. Diese Alternative kann ausgewählt werden, wenn die Information "Ich nehme ein Objekt in meiner Umgebung wahr" für andere relevant ist.

Bei Bejahung von Vorgang "Erzeugen der Daten bei Objektanwesenheit?" 130 wird zu Vorgang "Erzeugen der Daten bei validem Objekt?" 140 verzweigt. Dieser Anlass kann ausgewählt werden, wenn ausschließlich die Information "Ich nehme ein valides Objekt in meiner Umgebung wahr" für andere relevant ist. Das verschafft die Sicherheit, dass keine "Phantomobjekte" versendet werden, was den positiven Nebeneffekt hat, dass der Kanal für die Übertragung nicht unnötig belastet wird. Bei Verneinung von Vorgang "Erzeugen der Daten bei Objektanwesenheit?" 130 ist mit Vorgang A1 das periodische Senden 160 festgelegt.

Wird bei Vorgang "Erzeugen der Daten bei validem Objekt?" 140 verneint, ist damit ein "periodisches Erzeugen der Daten, wenn Objekt zur Verfügung steht" 170 als Vorgang A2 bestimmt. Wird der Vorgang 140 hingegen bejaht, ist damit eine "periodisch Erzeugen der Daten, wenn valides Objekt zur Verfügung steht", Vorgang A3/180 bestimmt. Dabei kann die Information "Ich nehme ein valides Objekt in meiner Umgebung wahr" für andere relevant sein. Das bringt die Sicherheit, dass keine "Phantomobjekte" versendet werden, was den positiven Nebeneffekt hat, dass der Kanal nicht unnötig belastet wird.

Wird bei Vorgang "periodisch Erzeugen der Daten" 120 verneint, wird zum Vorgang "Erzeugen der Daten bei validem Objekt?" 150 verzweigt. Bei Bejahung wird die "Erzeugen der Daten bei Änderung eines validen Objekts" 200, Vorgang A5, bestimmt. Bei Verneinung beim Vorgang 150 wird die "Erzeugen der Daten bei Änderung eines Objekts" A4, Vorgang 190, bestimmt. Dies ist eine noch stärkere Einschränkung zu dem vorgenannten Fall. Der Vorteil ist hierbei die erhöhte Sendedisziplin, was sich vorteilhaft auf die Kanallast des Übertragungskanals auswirken kann.

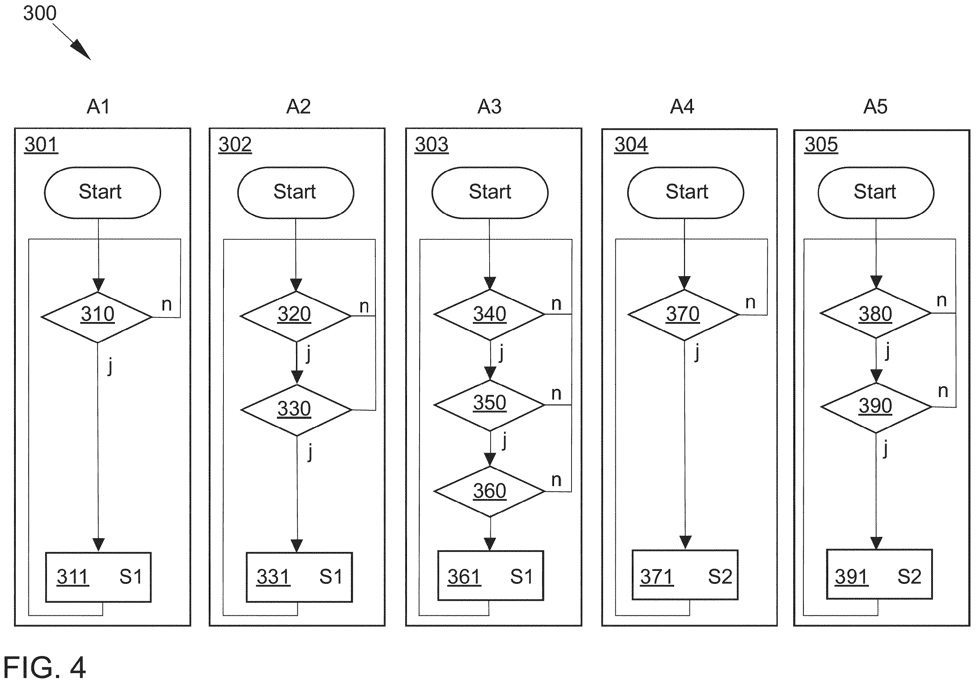

Die Fig. 4 zeigt alternative Erzeugungsformen der Daten. So sind im Schaubild 300 verschiedene Algorithmen zum Erzeugen der Daten dargestellt. Bei periodischem Erzeugen der Daten 301/A1 wird in den Vorgang "Zeitintervall abgelaufen?" 310 verzweigt, wobei bei Bejahung zur Datenerzeugung zum periodischen Senden S1 verzweigt wird. Bei Verneinung wird der Vorgang 310 wiederum erreicht.

Bei periodischem Erzeugen der Daten, Vorgang A2 oder 302, wenn ein Objekt zur Verfügung steht, wird der Vorgang "Zeitintervall abgelaufen?" 320 angesteuert. Bei Verneinung wird der Vorgang 320 wiederum erreicht. Bei Bejahung wird zum Vorgang "steht Objekt zur Verfügung?" 330 verzweigt. Bei dessen Verneinung wird wiederum zum Vorgang 320 verzweigt. Bei dessen Bejahung wird zum Vorgang periodisches Senden S1/331 verzweigt.

Bei periodischem Erzeugen der Daten, wenn ein valides Objekt zur Verfügung steht, Vorgang 303/A3, wird zu Vorgang 340 entsprechend den Vorgängen 310 und 320 verzweigt. Bei Bejahung wird zu Vorgang 350 entsprechend Vorgang 330 verzweigt. Wiederum bei Bejahung wird zu Vorgang "ist Objekt valide?" 360 verzweigt. Bei Bejahung wird zu Zustand "periodisches Senden S1" 361 verzweigt, bei Verneinung zu Vorgang 340 rückverzweigt.

Bei aperiodischem Erzeugen der Daten bei Änderung eines Objekts 304/A4 wird zu Vorgang "hat sich Objekt verändert?" 370 verzweigt. Bei Bejahung wird zu Vorgang "aperiodisches Senden S2" 371 verzweigt. Bei Verneinung wird wiederum zu Vorgang 370 verzweigt.

Bei aperiodischem Erzeugen der Daten bei Änderung eines validen Objekts 305/A5 wird zu Vorgang 380 entsprechend Vorgang 370 verzweigt. Bei Bejahung wird zu Vorgang "ist Objekt valide?" 390 verzweigt. Bei Bejahung von Vorgang 390 wird zu Vorgang "aperiodisches Senden S2" 391 verzweigt, bei Verneinung wird zu Vorgang 380 rückverzweigt.

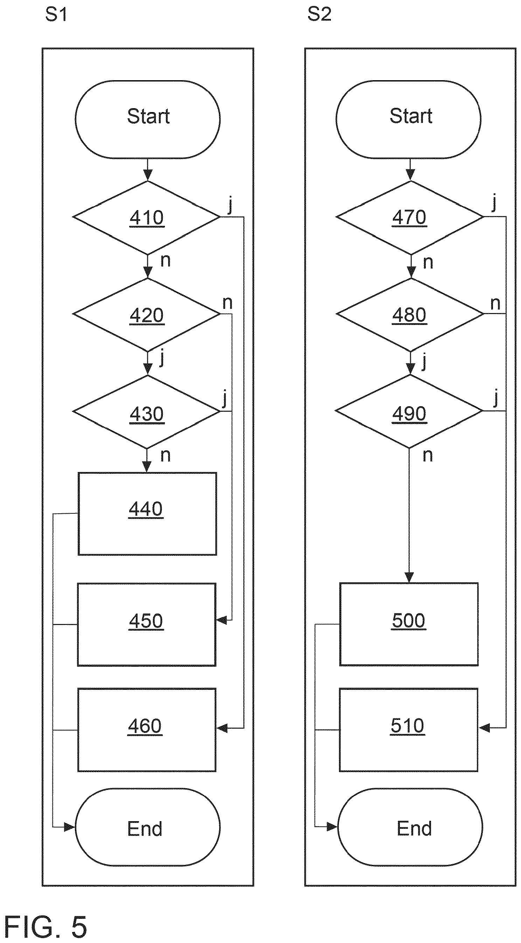

Die Fig. 5 zeigt Sendevorgänge für periodisch, S1, oder aperiodisch, S2, erzeugte Daten. Die Prozesse S1 oder S2 werden aus den Erzeugungsformen der Fig. 4 erreicht, die ihrerseits in den Vorgängen S1 oder S2 enden.

So zeigt der Prozess S1 nach dem Start den Vorgang "liegt höherpriore Nachricht vor?" 410. Bei Bejahung wird zu Vorgang "nicht senden" 460 verzweigt und die erzeugten Daten verworfen. Bei Verneinung wird zu Vorgang "existiert ein Kommunikationspartner?" 420 verzweigt. Bei Verneinung wird zu Vorgang "langperiodisches Senden (selten)" 450 verzweigt und in vorgegebenen großen Abständen gesendet. Dies kann durch regelmäßige Verzögerung des Sendevorgangs erreicht werden. Bei Bejahung wird zu Vorgang "Übertragungskanal überlastet?" 430 verzweigt. Bei Bejahung wird wiederum zu Vorgang 450 verzweigt, bei Verneinung wird zu Vorgang "kurzperiodisches Senden (häufig)" 440 verzweigt und in kurzen Abständen gesendet. Dies kann durch sofortige Ausführung des Sendevorgangs erreicht werden. Alle Zweige werden durch Erreichen des ENDE Vorgangs beendet.

Alternativ zu den gezeigten langperiodischen 450 und kurzperiodischen Senden 440 kann die Sendehäufigkeit zwischen diesen beiden Werten auch schrittweise verändert werden. Dazu können zusätzliche Parameter herangezogen werden, die in Fig. 5 nicht gezeigt sind und die Vorgänge 440 und 450 ergänzen. Hierbei kann die Periode für das langperiodischen 450 oder das kurzperiodischen Senden 440 abhängig von Parametern für Fahrzustand, Straßeneigenschaften, Straßenführung und Verkehrszustand weiter beeinflusst werden.

Beeinflussung durch den Fahrzustand: Es kann vorteilhaft sein, die Sendefrequenz der EPM zu erhöhen, wenn das sendende Fahrzeug schneller unterwegs ist. Denn desto schneller ändert sich auch das Umfeld dieses Fahrzeugs. Entsprechend könnte sich die Sendeperiode (ähnlich dem GALA (geschwindigkeitsabhängigen Lautstärkeanpassung) - Signal beim Autoradio) zum Beispiel proportional zur Fahrzeuggeschwindigkeit ändern.

Beeinflussung durch die Straßeneigenschaft: Es kann vorteilhaft sein, die Sendefrequenz je nach Straßeneigenschaft zu verändern. So erscheint es sinnvoll, eine EPM im Stadtverkehr häufiger zu senden als auf der Landstraße oder als auf der Autobahn. Denn in der Stadt verändert sich das Umfeld im Allgemeinen rascher als auf der Landstraße oder als auf der Autobahn. Die Sendeperiode könnte sich um einen festen, straßeneigenschaftstypischen Faktor ändern.

Beeinflussung durch die Straßenführung: Es kann vorteilhaft sein, die Sendefrequenz um einen festen Faktor zu erhöhen, wenn sich das Fahrzeug in einer Kurve, Kreuzung, Auffahrt oder Einmündung befindet, weil sich das Umfeld dort wahrscheinlich schnell ändert. Im Algorithmus S1 sollte dementsprechend ein fester Faktor den Sendezuständen "kurzperiodisch senden" und "langperiodisch senden" auferlegt werden.

Beeinflussung durch den Verkehrszustand: Es kann vorteilhaft sein, die Sendefrequenz der EPM zu erniedrigen, wenn der Verkehrszustand dichter wird. Denn desto schlechter wird die Sicht der Fahrzeugsensoren und desto höher die Wahrscheinlichkeit, dass ein Objekt bereits von einem anderen Fahrzeug detektiert wurde. Die Sendeperiode könnte sich (ähnlich dem GALA-Signal beim Autoradio) z. B. proportional zur Verkehrsdichte ändern.

Der Prozess S2 für die aperiodische Sendung verzweigt nach dem Start in den Vorgang "liegt höherpriore Nachricht vor?" 470, ähnlich dem Vorgang 410. Bei Bejahung wird zu Vorgang 510 "nicht senden" verzweigt und die erzeugten Daten werden verworfen. Bei Verneinung wird zu Vorgang "existiert ein Kommunikationspartner?" 480 verzweigt. Wird Vorgang 480 verneint, wird wiederum zu Vorgang 510 verzweigt und die Daten werden verworfen. Bei Bejahung wird zu Vorgang "Übertragungskanal überlastet?" 490 verzweigt. Bei Bejahung wird wiederum zu Vorgang 510 verzweigt und die Daten werden verworfen. Bei Verneinung wird zu Vorgang "senden" 500 verzweigt und die Daten werden gesendet. Alle Zweige werden durch Erreichen des ENDE Vorgangs beendet.

Die Fig. 6 zeigt eine Struktur eines Datenfeldes 600 zur Übermittlung der Daten, das über eine Luftschnittstelle empfangen werden kann. Dieses Datenfeld 600 enthält Daten vom Sender. Sie können auch ergänzend Daten dritter EPM-Teilnehmer enthalten, die dem Sender vorab zugängig wurden. Das Datenfeld 600 umfasst dabei ein Header 610, der zum Beispiel als Standard ITS-S (Intelligent Transport Systems-Station) ausgebildet sein kann in Anlehnung an ETSI TS 102 894-2. Er dient zur Identifizierung des Datenfeldes 600. Anschließend kann ein Beschreibungsfeld 620 angeordnet sein, das eine Identifikation des Senders und/oder eine Position des Senders und/oder einen Abstand des als Fahrzeugs ausgebildeten Senders und/oder eine Geschwindigkeit des Fahrzeugs und/oder eine Beschleunigung des Fahrzeugs und/oder zumindest eine Eigenschaft der lokalen Sensoren des Senders umfassen kann. Im folgenden dynamischen Objekt-Container 630 können die dynamischen Objekte übermittelt werden. Im anschließenden statischen Objekt-Container 640 können die statischen Objekte übermittelt werden. Ein dynamisches Objekt 632, 634 kann Sensorinformation des Senders und/oder eine Lokalisierungsinformation, die eine lokale oder eine globale Bezugsgröße enthält und/oder Dynamikangaben zur Beschreibung der Objektdynamik und/oder eine Klassifikation des Objekts und/oder eine geschätzte geometrische Dimensionen des Objekts umfassen. Ein statisches Objekt 642, 644 kann Sensorinformation des Senders und/oder eine Lokalisierungsinformationen und/oder eine Klassifikation des Objekts und/oder eine geschätzte geometrische Dimensionen des Objekts oder ein Belegungsgitter (occupancy grid) eines Erfassungsraumes umfassen.

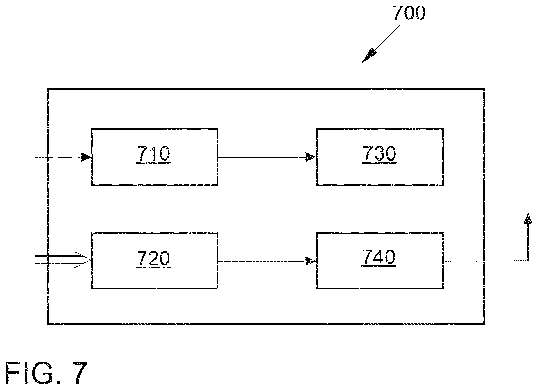

Fig. 7 zeigt ein Prinzipschaltbild einer Vorrichtung 700 zur Erzeugung und Übertragung von Daten. Dabei werden die Daten an einen als Verkehrsteilnehmer ausgebildeten Empfänger übertragen. Ein Erzeugungsprozessor 710 dient der Erzeugung von Informationen eines geografischen Umfeldmodels der Vorrichtung, wobei das geografische Umfeldmodel eine Erkennung von Objekten umfasst. Ein Datenerzeugungsprozessor 730 erzeugt zu übertragende Daten in Abhängigkeit der erkannten Objekte. Ein Erfassungsprozessor 720 dient der Erfassung von Umfeldparametern der Vorrichtung, zum Beispiel der freien Kanalkapazität oder der Straßenführung. Eine Übertragungseinrichtung 740 überträgt die Daten in Abhängigkeit der Umfeldparameter an einen als Verkehrsteilnehmer ausgebildeten Empfänger.

Allgemein lässt sich feststellen, dass die Effizienz bei der Nutzung des Nachrichtenübertragungskanals wesentlich vom Algorithmus der Nachrichtenerzeugung und Nachrichtenübertragung abhängt.

Für die Generierung von Nachrichten (Erzeugungsmodus) gibt es prinzipiell folgende Möglichkeiten:
1. aperiodisch (ereignisbasiert)
   Eine EPM wird erzeugt immer dann, wenn sich seit der Erzeugung der letzten EPM:
   - die (Aus-)Richtung des beobachteten Objektes um mehr als 4° geändert hat,
   - das beobachtete Objekt um mehr als 4 Meter bewegt hat,
   - die Geschwindigkeit des beobachteten Objektes sich um mehr als 0,5 Meter/Sekunde geändert hat.
2. periodisch
   2.1. konstante Wiederholfrequenz
   2.2. variable Wiederholfrequenz
      2.2.1. analog zum CAM-Standard, der im Gegensatz zur Erfindung die Erzeugung und die Übertragung jedoch nicht trennt.
         Analog zur CAM wird die EPM mit einer festgelegten, minimalen Wiederholfrequenz erzeugt. Diese Wiederholfrequenz wird auf vordefinierte Werte erhöht, wenn sich seit Erzeugung der letzten EPM:
         - die (Aus-)Richtung des beobachteten Objektes um mehr als 4° geändert hat,
         - das beobachtete Objekt um mehr als 4 Meter bewegt hat,
         - die Geschwindigkeit des beobachteten Objektes um mehr als 0,5 Meter/Sekunde geändert hat.
      2.2.2. nicht analog zum CAM-Standard (proprietär)
         Die EPM kann alternativ auch nach folgenden Kriterien erzeugt werden:
         a. regelmäßig, aber unabhängig davon, ob ein Objekt erkannt wurde oder nicht
         b. sobald Objekte zur Übertragung bereit stehen, egal ob valide oder nicht
         c. sobald sich eines der verwalteten Objekte verändert hat (nach CAM-Kriterien, s. o.)
         d. sobald Objekte bereit stehen, die validiert sind
         e. ein optionaler Container mit dem Field-of-View (statisch) wird nur z. B. einmal pro Sekunde erzeugt
      2.2.2.e. ist eine Möglichkeit, die immer angewendet werden kann, unabhängig von den restlichen, genannten Bedingungen.

Eine Möglichkeit ist es, den o. g. Erzeugungsmodus einmalig fest einzustellen. Alternativ könnte der Algorithmus beispielsweise so aussehen, wie in Fig. 3 dargestellt. Demnach würde der Algorithmus starten, sobald die Zündung eingeschaltet wurde. Will man periodisch Daten erzeugen, muss geklärt werden, ob die Daten kontinuierlich erzeugt werden sollen oder nur dann, wenn ein Objekt zur Verfügung steht. In letzterem Fall ist noch die Frage zu klären, ob jedes Mal bei Änderung eines Objektes Daten erzeugt werden sollen oder nur dann, wenn dieses Objekt valide ist. Sollen alternativ aperiodisch Daten erzeugt werden, muss geklärt werden, ob nur valide Objekte Daten erzeugt werden sollen. Der Algorithmus wird beendet, wenn die Zündung ausgeschaltet wird.

Je nachdem welcher Erzeugungsmodus gewählt ist, werden unterschiedliche Algorithmen durchlaufen (s. Algorithmen A1 bis A5 in Fig. 4). Der Erzeugungszustand wird jeweils betreten, sobald die Zündung eingeschaltet wird respektive der Algorithmus gemäß Fig. 3 durchlaufen wurde. Er endet, sobald die Zündung ausgeschaltet wird bzw. der Algorithmus nach Fig. 3 durch Ausschalten der Zündung verlassen wird.

Fig. 4, Algorithmus A1 beschreibt das periodische Erzeugen einer Nachricht. Die Nachricht wird dabei stets nach Ablauf eines festen Zeitintervalls erzeugt.

Fig. 4, Algorithmus A2 beschreibt das periodische Erzeugen einer Nachricht, wenn gleichzeitig ein Objekt zur Verfügung steht, also in der fahrzeugeigenen Objektdatenbank hinterlegt ist. Die Nachricht wird dabei nach Ablauf eines festen Zeitintervalls erzeugt, wenn auch die Überprüfung erfolgreich war, dass ein Objekt zur Verfügung steht.

Fig. 4, Algorithmus A3 beschreibt das periodische Erzeugen einer Nachricht, wenn gleichzeitig ein Objekt zur Verfügung steht und dieses auch noch valide ist, also fahrzeugintern hinsichtlich seiner Gültigkeit (z. B. durch Abgleich mit weiteren Sensordaten) für gültig befunden wurde. Die Nachricht wird dabei nach Ablauf eines festen Zeitintervalls erzeugt, wenn auch die Überprüfung erfolgreich war, dass ein Objekt zur Verfügung steht sowie die Prüfung der Validität dieses Objektes erfolgreich war.

Fig. 4, Algorithmus A4 beschreibt das aperiodische Erzeugen einer Nachricht bei Änderung eines Objektes. Die Nachricht wird dabei immer dann erzeugt, sobald erkannt wurde, dass sich ein Objekt gemäß der o. g. Kriterien für aperiodisches Senden verändert hat.

Fig. 4, Algorithmus A5 beschreibt das aperiodische Senden einer Nachricht bei Änderung eines validen Objektes mit einer Existenzwahrscheinlichkeit über einem Schwellwert. Die Nachricht wird dabei immer dann erzeugt, sobald erkannt wurde, dass sich ein Objekt verändert hat, welches zudem auch fahrzeugintern hinsichtlich seiner Gültigkeit (z. B. durch Abgleich mit weiteren Sensordaten) für gültig befunden wurde.

Die Sendealgorithmen S1 und S2 für die Algorithmen A1 bis A2 gemäß Fig. 5 sind im Wesentlichen identisch. Sie unterscheiden sich lediglich durch einen Zusatzzustand für das periodische Senden in S1. Hierbei wird berücksichtigt, dass es sinnvoll sein kann, die Sendeperiode je nach Fahrzeug-, Fahr-, Straßen- oder Verkehrszustand flexibel zu halten. Folgende Beispiele sollen dies erläutern:
- Fahrzustand: Geschwindigkeit
- Straßeneigenschaft: Autobahn, Landstraße, Innenstadt
- Straßentopologie: Kurve, Kreuzung, Einmündung, Auffahrt
- Verkehrszustand: "dicht"

Die Sendealgorithmen werden jeweils betreten, wenn sie aus einem der vorgenannten Algorithmen A1 bis A5 heraus aufgerufen werden. Sie enden nachdem sie einmal durchgelaufen sind und kehren dann wieder zu dem aufrufenden Algorithmus zurück (siehe Fig. 4).

Für das periodische Senden wird der Sendealgorithmus S1 verwendet. Hier wird unterschieden zwischen kurzperiodischem und langperiodischem Senden. Mit einer langen Periode kann immer dann gesendet werden, wenn der Übertragungskanal überlastet ist. Dies dient der Reduktion des Datenaufkommens. Ansonsten wird kurzperiodisch gesendet.

Beim aperiodischen Senden ist hier vorgeschlagen, nur dann zu senden, wenn der Übertragungskanal nicht überlastet ist.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann beziehungsweise können beispielsweise auch auf einem maschinenlesbaren Träger oder Datenträger gespeichert sein. Der Programmcode oder die Daten kann beziehungsweise können unter anderem als Quellcode, Maschinencode oder Bytecode sowie als anderer Zwischencode vorliegen.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

10 Sender
20 Empfänger
30 Sensoren des Senders
50 Erfassung von Umfeldparametern
60 Erzeugen der Daten
70 Übertragung der Daten
100 Auswahl Erzeugungsmodus
110 Auswahlvorgang Erzeugungsmodus
120 periodisches Erzeugen der Daten?
130 Erzeugen der Daten bei Objektanwesenheit?
140 Erzeugen der Daten bei validem Objekt?
150 Erzeugen der Daten bei validem Objekt?
160 periodisches Erzeugen der Daten
170 periodisches Erzeugen der Daten, wenn Objekt zur Verfügung steht
180 periodisches Erzeugen der Daten, wenn valides Objekt zur Verfügung steht
190 Erzeugen der Daten bei Änderung eines Objekts
200 Erzeugen der Daten bei Änderung eines validen Objekts
300 Algorithmen zum Erzeugen der Daten
301 periodisches Erzeugen der Daten
302 periodisches Erzeugen der Daten, wenn Objekt zur Verfügung steht
303 periodisches Erzeugen der Daten, wenn valides Objekt zur Verfügung steht
304 Erzeugen der Daten bei Änderung eines Objekts
305 Erzeugen der Daten bei Änderung eines validen Objekts
310/320/340 Zeitintervall abgelaufen?
311/331/361 periodisches Senden S1
371/391 aperiodisches Senden S2
330/350 steht Objekt zur Verfügung?
360/390 ist Objekt valide?
370/380 hat sich Objekt verändert?
410/470 liegt höherpriore Nachricht vor?
420/480 existiert ein Kommunikationspartner?
430/490 Übertragungskanal überlastet?
440 kurzperiodisches Senden (häufig)
450 langperiodisches Senden (selten)
460/510 nicht senden
500 senden
600 Datenfeld
610 Header
620 Beschreibungsfeld
630 dynamischer Objekt-Container
632 dynamisches Objekt
634 dynamisches Objekt
640 statischer Objekt-Container
642 statisches Objekt
644 statisches Objekt
700 Vorrichtung zur Erzeugung und Übertragung von Daten
710 Erzeugungsprozessor
720 Erfassungsprozessor
730 Datenerzeugungsprozessor
740 Übertragungseinrichtung

## Patentansprüche

1. Verfahren zur Erzeugung und Übertragung von Daten von einem Sender zu einem als Verkehrsteilnehmer ausgebildeten Empfänger, wobei die Daten auf einem geografischen Umfeldmodel des Senders (10) basieren, wobei das geografische Umfeldmodel für den Verkehrsteilnehmer relevante Objekte im geografischen Umfeld des Senders umfasst;
wobei Verfahrensschritte beim Sender umfassen:
Erfassung (50) von Parametern eines Übertragungssystems zur Übertragung der Daten und/oder von verkehrsrelevanten Parametern des Senders; wobei die Parameter des Übertragungssystems eine Erreichbarkeit zumindest eines Empfängers (420, 480) umfassen;
Erzeugung (60) der Daten in Abhängigkeit der für den Verkehrsteilnehmer relevanten Objekte; und
Übertragung (70) der Daten in Abhängigkeit der Parameter des Übertragungssystems und/oder der verkehrsrelevanten Parameter des Senders, wobei das geografische Umfeldmodel des Senders (10) eine Objekterkennung auf Basis lokaler Sensordaten (30) des Senders und/oder auf Basis von Sensordaten anderer Verkehrsteilnehmer oder Infrastruktur umfasst,
wobei die Objekterkennung Daten für eine Existenzwahrscheinlichkeit eines Objekts umfasst.

2. Verfahren nach einem der vorherigen Ansprüche, wobei die verkehrsrelevanten Parameter Daten zur Beschreibung zumindest des als Fahrzeug ausgebildeten Senders (10) und/oder eines Verkehrszustand und/oder einer Straßenführung umfassen.

3. Verfahren nach Anspruch 2, wobei die Parameter des Übertragungssystems eine Kanalkapazität (430, 490) des Kanals zur Übertragung der Daten und/oder das Vorhandensein einer Nachricht mit höherer Priorität (410, 470) umfassen.

4. Verfahren nach einem der Ansprüche 2 oder 3, wobei die Kanalkapazität und/oder die verkehrsrelevanten Parameter die Übertragungshäufigkeit der Daten (440, 450) beeinflussen.

5. Verfahren nach einem der vorherigen Ansprüche, wobei der Kanal zur Übertragung der Daten auch zur Übertragung von allgemeinen Aufmerksamkeitsnachrichten -CAM- und/oder dezentralisierten Umfeldnachrichten -DENIM- verwendet wird.

6. Verfahren nach Anspruch 1, wobei der Kanal zur Übertragung der Daten gemäß einer standardisierten Referenzarchitektur ausgebildet ist.

7. Verfahren nach einem der vorherigen Ansprüche, wobei der Sender (10) als weiterer Verkehrsteilnehmer oder als Infrastruktur ausgebildet ist.

8. Verfahren nach einem der Ansprüche 1-6, wobei Sender (10) und/oder Empfänger (20) als Fahrzeuge ausgebildet sind.

9. Verfahren nach Anspruch 1, wobei die Objekterkennung Daten für Veränderungsangaben des Objekts umfasst, wobei die Daten für die Veränderungsangaben des Objekts zeitlich und/oder räumliche Veränderungen beschreiben.

10. Verfahren nach einem der vorherigen Ansprüche, wobei ein Anlass zur Erzeugung der Daten umfasst:
eine periodische Erzeugung (160), oder
eine Erzeugung, sobald ein Objekt erkannt ist (170), oder
eine Erzeugung, sobald ein Objekt mit überwiegender Existenzwahrscheinlichkeit erkannt ist (180), oder
eine Erzeugung, sobald ein Objekt ein Veränderungsmaß überschritten hat (190), oder
eine Erzeugung, sobald ein Objekt mit überwiegender Existenzwahrscheinlichkeit ein Veränderungsmaß überschritten hat (200).

11. Verfahren nach einem der vorherigen Ansprüche, wobei die Daten in einem Datenfeld (600) über ein mobiles Netzwerk gesendet werden, wobei das Datenfeld (600) umfasst:
ein Headerfeld (610) mit genereller Information und der Nachrichten- und Fahrzeug/Infrastruktur-Identifikation; und/oder
ein Beschreibungsfeld (620), das eine Identifikation des Fahrzeugs und/oder eine Position des Fahrzeugs und/oder einen Abstand des Fahrzeugs und/oder eine Geschwindigkeit des Fahrzeugs und/oder eine Beschleunigung des Fahrzeugs und/oder zumindest eine Eigenschaft der lokalen Sensoren des Fahrzeugs umfasst; und/oder
einen dynamischen Objekt-Container (630), der die Beschreibung zumindest eines dynamischen Objekts umfasst; und/oder
einen statischen Objekt-Container (640), der die Beschreibung zumindest eines statischen Objekts umfasst.

12. Vorrichtung (10, 700) zur Erzeugung und Übertragung von Daten umfassend:
einen Erzeugungsprozessor (710) zum Erzeugen von Informationen eines geografischen Umfeldmodels der Vorrichtung, wobei das geografische Umfeldmodel für einen Verkehrsteilnehmer relevante Objekte im geografischen Umfeld der Vorrichtung umfasst;
einen Erfassungsprozessor (720) zur Erfassung von Parametern eines Übertragungssystems zur Übertragung der Daten und/oder von verkehrsrelevanten Parametern der Vorrichtung;
einen Datenerzeugungsprozessor (730), der die Daten in Abhängigkeit der relevanten Objekte erzeugt; und
eine Übertragungseinrichtung (740), die die Daten in Abhängigkeit der Parameter des Übertragungssystems und/oder der verkehrsrelevanten Parameter an einen als Verkehrsteilnehmer ausgebildeten Empfänger überträgt,
wobei die Parameter des Übertragungssystems eine Erreichbarkeit zumindest eines Empfängers (420, 480) umfassen,
wobei das geografische Umfeldmodel der Vorrichtung (10) eine Objekterkennung auf Basis lokaler Sensordaten (30) der Vorrichtung und/oder auf Basis von Sensordaten anderer Verkehrsteilnehmer oder Infrastruktur umfasst,
wobei die Objekterkennung Daten für eine Existenzwahrscheinlichkeit eines Objekts umfasst.

13. Vorrichtung (10, 700) nach Anspruch 12, wobei die Vorrichtung (10, 700) als Fahrzeug (20) oder als Verkehrsinfrastrukturbauwerk ausgebildet ist.

14. Computerprogramm zur Durchführung des Verfahrens nach einem der Ansprüche 1 bis 11, wenn das Computerprogramm auf einer programmierbaren Hardwarekomponente abläuft.

## Claims

1. Method for generating and transmitting data from a transmitter to a receiver in the form of a road user, wherein the data are based on a geographical environment model of the transmitter (10), wherein the geographical environment model comprises objects in the geographical environment of the transmitter that are relevant to the road user; wherein method steps at the transmitter comprise:
acquiring (50) parameters of a transmission system for transmitting the data and/or traffic-relevant parameters of the transmitter; wherein the parameters of the transmission system comprise a reachability of at least one receiver (420, 480);
generating (60) the data on the basis of the objects relevant to the road user; and
transmitting (70) the data on the basis of the parameters of the transmission system and/or the traffic-relevant parameters of the transmitter,
wherein the geographical environment model of the transmitter (10) comprises object recognition on the basis of local sensor data (30) of the transmitter and/or on the basis of sensor data of other road users or infrastructure,
wherein the object recognition comprises data for a probability of existence of an object.

2. Method according to any of the preceding claims, wherein the traffic-relevant parameters comprise data for describing at least the transmitter (10) in the form of a vehicle, and/or a traffic condition and/or a road layout.

3. Method according to claim 2, wherein the parameters of the transmission system comprise a channel capacity (430, 490) of the channel for transmitting the data and/or the presence of a higher-priority message (410, 470).

4. Method according to any of claims 2 or 3, wherein the channel capacity and/or the traffic-relevant parameters influence the transmission frequency of the data (440, 450).

5. Method according to any of the preceding claims, wherein the channel for transmitting the data is also used for transmitting general awareness messages - CAM- and/or decentralized environment messages -DENIM-.

6. Method according to claim 1, wherein the channel for transmitting the data is designed according to a standardized reference architecture.

7. Method according to any of the preceding claims, wherein the transmitter (10) is in the form of another road user or infrastructure.

8. Method according to any of claims 1-6, wherein the transmitter (10) and/or receiver (20) are in the form of vehicles.

9. Method according to claim 1, wherein the object recognition comprises data for change information of the object, wherein the data for the change information of the object describe temporal and/or spatial changes.

10. Method according to any of the preceding claims, wherein a reason for generating the data comprises:
a periodic generation (160), or
a generation as soon as an object is recognized (170), or
a generation as soon as an object is recognized with a predominant probability of existence (180), or
a generation as soon as an object has exceeded a change level (190), or
a generation as soon as an object with a predominant probability of existence has exceeded a degree of change (200).

11. Method according to any of the preceding claims, wherein the data are transmitted in a data field (600) via a mobile network, wherein the data field (600) comprises:
a header field (610) comprising general information and the message and vehicle/infrastructure identification; and/or
a description field (620) comprising an identification of the vehicle and/or a position of the vehicle and/or a distance of the vehicle and/or a speed of the vehicle and/or an acceleration of the vehicle and/or at least one property of the local sensors of the vehicle; and/or
a dynamic object container (630) comprising the description of at least one dynamic object; and/or
a static object container (640) comprising the description of at least one static object.

12. Device (10, 700) for generating and transmitting data comprising:
a generation processor (710) for generating information relating to a geographical environment model of the device, wherein the geographical environment model comprises objects in the geographical environment of the device that are relevant to a road user;
an acquisition processor (720) for acquiring parameters of a transmission system for transmitting the data and/or traffic-relevant parameters of the device;
a data generation processor (730) which generates the data on the basis of the relevant objects; and
a transmission means (740) which transmits the data on the basis of the parameters of the transmission system and/or the traffic-relevant parameters to a receiver in the form of a road user,
wherein the parameters of the transmission system comprise a reachability of at least one receiver (420, 480),
wherein the geographical environment model of the device (10) comprises object recognition on the basis of local sensor data (30) of the device and/or on the basis of sensor data of other road users or infrastructure,
wherein the object recognition comprises data for a probability of existence of an object.

13. Device (10, 700) according to claim 12, wherein the device (10, 700) is in the form of a vehicle (20) or a traffic infrastructure.

14. Computer program for carrying out the method according to any of claims 1 to 11 when the computer program runs on a programmable hardware component.

## Revendications

1. Procédé de génération et de transmission de données d'un émetteur à un récepteur conçu comme un usager de la route, les données étant basées sur un modèle d'environnement géographique de l'émetteur (10), le modèle d'environnement géographique comprenant des objets pertinents pour l'usager de la route dans l'environnement géographique de l'émetteur ; les étapes de procédé au niveau de l'émetteur comprenant :
la détection (50) de paramètres d'un système de transmission pour la transmission des données et/ou de paramètres pertinents pour le trafic de l'émetteur ; les paramètres du système de transmission comprenant une accessibilité d'au moins un récepteur (420, 480) ;
la génération (60) des données en fonction des objets pertinents pour l'usager de la route ; et
la transmission (70) des données en fonction des paramètres du système de transmission et/ou des paramètres pertinents pour le trafic de l'émetteur,
le modèle d'environnement géographique de l'émetteur (10) comprenant une reconnaissance d'objet sur la base de données locales (30) de capteur de l'émetteur et/ou sur la base de données de capteur d'autres usagers de la route ou d'une infrastructure,
la reconnaissance d'objet comprenant des données pour une probabilité d'existence d'un objet.

2. Procédé selon l'une des revendications précédentes, les paramètres pertinents pour le trafic comprenant des données pour la description au moins de l'émetteur (10) conçu comme un véhicule et/ou d'un état du trafic et/ou d'un tracé routier.

3. Procédé selon la revendication 2, les paramètres du système de transmission comprenant une capacité de canal (430, 490) du canal pour la transmission des données et/ou la présence d'un message de priorité supérieure (410, 470).

4. Procédé selon l'une des revendications 2 ou 3, la capacité de canal et/ou les paramètres pertinents pour le trafic influençant la fréquence de transmission des données (440, 450).

5. Procédé selon l'une des revendications précédentes, le canal de transmission des données étant également utilisé pour la transmission de messages généraux de vigilance - CAM (Cooperative Awareness Message) - et/ou de messages décentralisés d'environnement - DENIM (Decentralized Environmental Notification Message).

6. Procédé selon la revendication 1, le canal étant conçu pour la transmission des données selon une architecture de référence standardisée.

7. Procédé selon l'une des revendications précédentes, l'émetteur (10) étant conçu comme un autre usager de la route ou comme une infrastructure.

8. Procédé selon l'une des revendications 1 à 6, l'émetteur (10) et/ou le récepteur (20) étant conçus comme des véhicules.

9. Procédé selon la revendication 1, la reconnaissance d'objet comprenant des données pour des indications de changement de l'objet, les données pour les indications de changement de l'objet décrivant des changements temporels et/ou spatiaux.

10. Procédé selon l'une des revendications précédentes, un motif pour la génération des données comprenant :
une génération périodique (160) ou
une génération dès qu'un objet est reconnu (170) ou
une génération dès qu'un objet avec une probabilité d'existence prépondérante (180) est reconnu ou
une génération dès qu'un objet a dépassé une mesure de changement (190) ou
une génération dès qu'un objet avec une probabilité d'existence prépondérante a dépassé une mesure de changement (200).

11. Procédé selon l'une des revendications précédentes, les données étant envoyées dans un champ de données (600) par l'intermédiaire d'un réseau mobile, le champ de données (600) comprenant :
un champ d'en-tête (610) comportant des informations générales et l'identification du message et du véhicule/de l'infrastructure ; et/ou
un champ de description (620) comprenant une identification du véhicule et/ou une position du véhicule et/ou une distance du véhicule et/ou une vitesse du véhicule et/ou une accélération du véhicule et/ou au moins une propriété des capteurs locaux du véhicule ; et/ou
un conteneur (630) d'objet dynamique comprenant la description d'au moins un objet dynamique ; et/ou
un conteneur (640) d'objet statique comprenant la description d'au moins un objet statique.

12. Dispositif (10, 700) de génération et de transmission de données comprenant :
un processeur de génération (710) pour la génération d'informations d'un modèle d'environnement géographique du dispositif, le modèle d'environnement géographique comprenant des objets pertinents pour un usager de la route dans l'environnement géographique du dispositif ;
un processeur de détection (720) pour la détection de paramètres d'un système de transmission pour la transmission des données et/ou de paramètres pertinents pour le trafic du dispositif ;
un processeur de génération de données (730) qui génère les données en fonction des objets pertinents ; et
un dispositif de transmission (740) qui transmet les données en fonction des paramètres du système de transmission et/ou des paramètres pertinents pour le trafic à un récepteur conçu comme un usager de la route,
les paramètres du système de transmission comprenant une accessibilité d'au moins un récepteur (420, 480),
le modèle d'environnement géographique du dispositif (10) comprenant une reconnaissance d'objet sur la base de données locales (30) de capteur du dispositif et/ou sur la base de données de capteur d'autres usagers de la route ou d'une infrastructure,
la reconnaissance d'objet comprenant des données pour une probabilité d'existence d'un objet.

13. Dispositif (10, 700) selon la revendication 12, le dispositif (10, 700) étant conçu comme un véhicule (20) ou comme un ouvrage d'infrastructure de transport.

14. Programme informatique pour la mise en œuvre du procédé selon l'une des revendications 1 à 11, lorsque le programme informatique est exécuté sur un composant matériel programmable.
